(19) Europäisches Patentamt
European Patent Office
Office européen des brevets

(11) EP 3 230 344 B1

(12) # EUROPÄISCHE PATENTSCHRIFT

(45) Veröffentlichungstag und Bekanntmachung des Hinweises auf die Patenterteilung:
**04.01.2023 Patentblatt 2023/01**

(21) Anmeldenummer: **15804394.3**

(22) Anmeldetag: **01.12.2015**

(51) Internationale Patentklassifikation (IPC):
***C08G 69/10*** (2006.01) ***C08G 69/04*** (2006.01)
***C08G 73/10*** (2006.01) ***C08L 79/08*** (2006.01)
***C08L 77/04*** (2006.01) ***C08K 5/17*** (2006.01)
***C11D 1/00*** (2006.01) ***C11D 1/04*** (2006.01)
***C11D 3/37*** (2006.01)

(52) Gemeinsame Patentklassifikation (CPC):
(C-Sets verfügbar)
**C08G 69/04; C08G 69/10; C08G 73/1092; C08K 5/175; C08L 77/04; C08L 79/08; C11D 3/3719;** Y02W 10/37 (Forts.)

(86) Internationale Anmeldenummer:
**PCT/EP2015/078188**

(87) Internationale Veröffentlichungsnummer:
**WO 2016/091654 (16.06.2016 Gazette 2016/24)**

(54) **VERFAHREN ZUR HERSTELLUNG VON POLYASPARAGINSÄURE MITTELS VORKONDENSAT**
METHOD FOR THE PREPARATION OF POLYASPARTIC ACID BY MEANS OF PRE-CONDENSATE
PROCÉDÉ DE FABRICATION D’ACIDES POLYASPARTIQUES AU MOYEN DE PRÉ-CONDENSAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2014 EP 14197589**

(43) Veröffentlichungstag der Anmeldung:
**18.10.2017 Patentblatt 2017/42**

(73) Patentinhaber: **BASF SE**
**67056 Ludwigshafen am Rhein (DE)**

(72) Erfinder:
- **TUERKOGLU, Gazi**
  **68163 Mannheim (DE)**
- **DETERING, Juergen**
  **67117 Limburgerhof (DE)**
- **FEHRINGER, Dietrich**
  **69234 Dielheim (DE)**
- **BENZ, Christian**
  **67549 Worms (DE)**

(74) Vertreter: **BASF IP Association**
**BASF SE**
**G-FLP-C006**
**67056 Ludwigshafen (DE)**

(56) Entgegenhaltungen:
**JP-A- 2000 273 173**
**US-A- 5 552 517**
**US-A- 5 756 595**
**US-A1- 2011 053 819**
**US-A1- 2012 125 374**
**US-B1- 6 380 350**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)

C-Sets
**C08L 77/04, C08K 5/175, C08L 79/08**

## Beschreibung

Die vorliegende Erfindung betrifft Verfahren zur Herstellung von Polyasparaginsäure mittels Vorkondensat aus Asparaginsäure und Polyaspartimid, Zusammensetzungen enthaltend derart erhältliche Polyasparaginsäure.

Die Herstellung von Polyasparaginsäure und ihrer Salze durch säurekatalysierte thermische Polykondensation von Asparaginsäure zu Polyaspartimid und anschließende alkalische Hydrolyse des Polyaspartimids ist prinzipiell bekannt. Als saure Katalysatoren werden beispielsweise Mineralsäuren wie Phosphorsäure, phosphorige Säure, Schwefelsäure und schweflige Säure eingesetzt. Auch organische Säuren wie Methansulfonsäure oder Amidosulfonsäure können verwendet werden. Als besonders geeignet hat sich Phosphorsäure als mittelstarke und nicht oxidativ wirkende Säure erwiesen. Aufgrund ihrer nicht oxidativen Wirkung ist auch die Methansulfonsäure (MSA) ein geeigneter Katalysator. Vorzugsweise dienen die Säuren wie z.B. die Phosphorsäure nicht nur als Katalysator, sondern auch als Lösemittel. Der Vorteil einer gut beherrschbaren Polykondensation, wenn Phosphorsäure Katalysator und Lösemittel zugleich ist, steht der Nachteil einer notwendigen Produktreinigung gegenüber. Die Säure muss durch Auswaschen entfernt werden und sollte aus Kostengründen aufwendig zurückgewonnen werden. Die Alternative bestünde in der Verwendung nur kleiner Mengen an Katalysator. Werden aber nur kleine Mengen des sauren Katalysators (1 bis 25 mol% bezogen auf die eingesetzte Menge an Asparaginsäure) verwendet, so treten während der Kondensation hochviskose bis sehr harte, zur Verbackung neigende Kondensationsphasen auf, die sich in Rührapparaturen oder Knetern nicht mehr rühren oder kneten lassen. Die Folge ist, dass die Kondensation entweder abgebrochen oder zumindest unterbrochen werden muss, um angebackenes festes Polykondensat wieder aufzubrechen und zu zerkleinern. Erst dann kann die Polykondensation fortgeführt werden. So wird in US 5457176 A die thermische Polykondensation von Asparaginsäure mit katalytischen Mengen Phosphorsäure bzw. Methansulfonsäure beschrieben. In beiden Beispielen wird die Polykondensation unterbrochen, das feste Zwischenprodukt aufwendig isoliert und zerkleinert, und das zerkleinerte Zwischenprodukt dem Reaktionsgefäß zur Vervollständigung der Kondensation wieder zugeführt. Ein ähnliches Verfahren ist in DE 4023463 A1 beschrieben, wo Phosphorsäure in der Kondensation von Asparaginsäure als Katalysator eingesetzt wird und das erhaltene Reaktionsprodukt in einer zweiten Stufe mechanisch zerkleinert werden muss. JP2000273173 offenbart die Herstellung hochmolekularer Polymerimide. US 5552517 offenbart die Herstellung von Polysuccinimiden in hochsiedenden organischen Lösungsmitteln.

Diese daraus zugrundeliegende technische Aufgabe wurde gelöst durch die vorliegende Erfindung wie hierin beschrieben und in den Ansprüchen definiert.

Die vorliegende Erfindung betrifft ein Verfahren zur Herstellung von Polyasparaginsäure, umfassend folgende Schritte:

(a) Vorkondensation von Asparaginsäure bei einer Temperatur von 100 bis 250 °C bis zu einem Umsetzungsgrad von mindestens 2 %, mindestens 5 % oder mindestens 8 %, bevorzugt bis zu 50%, weiter bevorzugt bis zu 45 %, weiter bevorzugt bis zu 40 %, weiter bevorzugt bis zu 35 %, weiter bevorzugt bis zu 30 %, weiter bevorzugt bis zu 25 % %, weiter bevorzugt bis zu 22 %, weiter bevorzugt bis zu 20 %, und besonders bevorzugt bis zu 15 %;
(b) optional Abkühlen des Vorkondensats nach (a);
(c) Zugabe von 1 bis 25 mol% eines sauren Katalysators;
(d) Polykondensation der Reaktionsmasse nach (c) bei 170 bis 250 °C;
(e) Hydrolyse der Polykondensate nach (d) unter Zugabe einer Base; und
(f) optional Ansäuern der in (e) erhaltenen Salze der Polyasparaginsäure.

Der optionale Schritt (f) des Ansäuerns des Salzes der Polyasparaginsäure im erfindungsgemäßen Verfahren dient dem Erhalt der Polyasparaginsäure in Säureform und kann in dem Fachmann bekannter Art und Weise und wie hier beispielhaft dargestellt durchgeführt werden. Falls nur das Salz der Polyasparaginsäure gewünscht ist, bspw. als Zwischenstufe, kann auf den Schritt (f) im Zusammenhang mit der vorliegenden Erfindung verzichtet werden. Wenn im Zusammenhang mit der vorliegenden Erfindung von Polyasparaginsäure die Rede ist, werden hierbei entsprechend auch ihre entsprechenden Salze umfasst, wie sie gemäß Schritt (e) des erfindungsgemäßen Herstellverfahrens erhältlich sind bzw. erhalten werden und wie vom Fachmann erkannt. Als mögliche Säuren kommen in diesem Zusammenhang beispielsweise Mineralsäuren oder saure Ionenaustauscher in Betracht. Mineralsäure kann hierbei beispielsweise Schwefelsäure oder Salzsäure sein. Es ist aber auch jede andere Säure möglich, welche für den Fachmann erkennbar zur Ansäuerung des Salzes der Polyasparaginsäure zum Erhalt der entsprechenden Säureform geeignet ist. Die Säureform der Polyasparaginsäure kann aber auch durch Behandlung mit einem sauren Ionenaustauscher wie zum Beispiel Amberlite IR 120 (Hydrogen Form) erhalten werden, in dem man beispielsweise die wässrige Na-Salzlösung (oder Lösung eines entsprechenden anderen Salzes) der Polyasparaginsäure über eine mit dem sauren Ionenaustauscher gepackten Säule fließen lässt. Dies gilt analog für alle erfindungsgemäßen Verfahren zur Herstellung von Polyasparaginsäure wie hier bereit gestellt und beschrieben.

Sind möglichst helle oder gar farblose Polyasparaginsäuren bzw. deren Salze erwünscht, können die nach

dem Schritt (e) erhaltenen Salze der Polyasparaginsäure mit Bleichmitteln wie beispielsweise Hypochlorit, Chlor, Chlordioxid, Wasserstoffperoxid, Peroxysäuren, Ozon oder Perboraten behandelt werden. Optional kann die farbliche Aufhellung auch durch die Behandlung der nach dem Schritt (d) erhaltenen Polykondensate mit den oben genannten Bleichmitteln erfolgen. Es ist zudem auch möglich, den Schritt (e), also die Hydrolyse der Polykondensate nach (d) unter Zugabe einer Base, in Gegenwart der oben genannten Bleichmittel durchzuführen. Als besonders bevorzugtes Bleichmittel ist Wasserstoffperoxid zu nennen. Die exakte Menge an einzusetzendem Bleichmittel richtet sich nach dem erwünschten Grad der Entfärbung. Die farbliche Aufhellung wird bevorzugt mit 0,1 - 20 Gew. %, weiter bevorzugt, 0,5 - 10 Gew. % Bleichmittel bezogen auf die bei der Synthese der Polyasparaginsäure eingesetzte Menge an L-Asparaginsäure durchgeführt.

Wie im Rahmen der vorliegenden Erfindungen überraschend gefunden wurde, kann das Auftreten einer zähen, harten und kaum noch rühr- oder knetbaren Kondensationszwischenphase vermieden werden, wenn man Asparaginsäure zunächst thermisch vor Zugabe eines sauren Katalysators bis zu einem Umsetzungsgrad von mindestens 2 % (mind. 5 % oder mind. 8 %, bevorzugt bis zu 50%, weiter bevorzugt bis zu 45 %, weiter bevorzugt bis zu 40 %, weiter bevorzugt bis zu 35 %, weiter bevorzugt bis zu 30 %, weiter bevorzugt bis zu 25 % %, weiter bevorzugt bis zu 22 %, weiter bevorzugt bis zu 20 %, und besonders bevorzugt bis zu 15 %) vorkondensiert. Es entsteht ein Vorkondensat aus noch nicht umgesetzter Asparaginsäure und Polyaspartimid. Zu einem solchen Vorkondensat kann dann erfindungsgemäß ein saurer Katalysator zugegeben werden, um die Asparaginsäure und das Polyasparatimid zu polykondensieren und letztlich vollständig zu Polyasparaginsäure umzusetzen. Ohne an eine Theorie gebunden zu sein, wird im Zusammenhang mit der vorliegenden Erfindung vermutet, dass Polyaspartimid als Prozesshilfsmittel fungiert, durch dessen Einsatz die kritische Phase der Asparaginsäurekondensation, bei welcher besagte zähe, harte und kaum noch rühr- oder knetbare Kondensationszwischenphase auftritt, vermieden werden kann. Das Polyaspartimid kann hierbei beispielsweise durch die thermische Vorkondensation von Asparaginsäure hergestellt werden wie auch hier beschrieben.

Falls nur das Salz der Polyasparaginsäure gewünscht ist, bspw. als Zwischenstufe, kann auf den Schritt (f) im Zusammenhang mit der vorliegenden Erfindung verzichtet werden. Wenn im Zusammenhang mit der vorliegenden Erfindung von Polyasparaginsäure die Rede ist, werden hierbei entsprechend auch ihre entsprechenden Salze umfasst, wie sie gemäß Schritt (e) des erfindungsgemäßen Herstellverfahrens erhältlich sind bzw. erhalten werden und wie vom Fachmann erkannt. Als mögliche Säuren kommen in diesem Zusammenhang beispielsweise Mineralsäuren oder saure Ionenaustauscher in Betracht. Mineralsäure kann hierbei beispielsweise Schwefelsäure oder Salzsäure sein. Es ist aber auch jede andere Säure möglich, welche für den Fachmann erkennbar zur Ansäuerung des Salzes der Polyasparaginsäure zum Erhalt der entsprechenden Säureform geeignet ist. Die Säureform der Polyasparaginsäure kann aber auch durch Behandlung mit einem sauren Ionenaustauscher wie zum Beispiel Amberlite IR 120 (Hydrogen Form) erhalten werden, in dem man beispielsweise die wässrige Na-Salzlösung (oder Lösung eines entsprechenden anderen Salzes) der Polyasparaginsäure über eine mit dem sauren Ionenaustauscher gepackten Säule fließen lässt.

Sind möglichst helle oder gar farblose Polyasparaginsäuren bzw. deren Salze erwünscht. können die nach dem Schritt (e) erhaltenen Salze der Polyasparaginsäure mit Bleichmitteln wie beispielsweise Hypochlorit. Chlor. Chlordioxid. Wasserstoffperoxid. Peroxysäuren. Ozon oder Perboraten behandelt werden. Optional kann die farbliche Aufhellung auch durch die Behandlung der nach dem Schritt (d) erhaltenen Polykondensate mit den oben genannten Bleichmitteln erfolgen. Es ist zudem auch möglich, den Schritt (e), also die Hydrolyse der Polykondensate nach (d) unter Zugabe einer Base, in Gegenwart der oben genannten Bleichmittel durchzuführen. Als besonders bevorzugtes Bleichmittel ist Wasserstoffperoxid zu nennen. Die exakte Menge an einzusetzendem Bleichmittel richtet sich nach dem erwünschten Grad der Entfärbung. Die farbliche Aufhellung wird bevorzugt mit 0.1 - 20 Gew. %. weiter bevorzugt. 0.5 - 10 Gew. % Bleichmittel bezogen auf die bei der Synthese der Polyasparaginsäure eingesetzte Menge an L-Asparaginsäure durchgeführt.

Die erfindungsgemäß hergestellten Polyasparaginsäuren finden Anwendung in bspw. Reinigungs-, Wasch- und Spülmittelzusammensetzungen, insbesondere, aber nicht ausschließlich, in Geschirrspülmitteln für die automatische Geschirrreinigung. Ein weiterer Vorteil der erfindungsgemäß hergestellten Polyasparaginsäure liegt darin, dass sie im Gegensatz zu anderen Polymeren, welche in derartigen Zusammensetzungen eingesetzt werden und durch radikalische Polymerisation aus carboxylhaltigen Monomeren hergestellt wurden, unter aeroben Bedingungen biologisch abbaubar sind.

Bei der in den erfindungsgemäßen Herstellverfahren eingesetzten Asparaginsäure kann es sich sowohl um L- als auch D- und DL-Asparaginsäure handeln. Bevorzugt wird L-Asparaginsäure eingesetzt.

Unter "Vorkondensation" wird im Rahmen der vorliegenden Erfindung, insbesondere bei Schritt (a) des hier beschriebenen erfindungsgemäßen Verfahrens, eine rein thermische Kondensation von Asparaginsäure (bspw. L-Asparaginsäure) ohne sauren Katalysator verstanden. Die Temperatur beträgt hierbei erfindungsgemäß 100 bis 250 °C, vorzugsweise 150 bis 250 °C, vorzugsweise 180 bis 250 °C, vorzugsweise 200 bis 250 °C, und besonders bevorzugt 220 bis 250 °C, jeweils bei 1 bar Reaktionsdruck. Wie dem Fachmann klar ersichtlich, können bei entsprechender Erhöhung oder Erniedrigung des Drucks auch niedrigere bzw. höhere Temperaturen angelegt werden. Die Vorkondensation wird erfindungsgemäß durchgeführt bis zu einem Umsetzungsgrad Asparaginsäure (bspw. L-Asparaginsäure)

zu Polyaspartimid von mindestens 2 %, 5 % oder 8 %, bevorzugt bis zu 50%, weiter bevorzugt bis zu 45 %, weiter bevorzugt bis zu 40 %, weiter bevorzugt bis zu 35 %, weiter bevorzugt bis zu 30 %, weiter bevorzugt bis zu 25 % %, weiter bevorzugt bis zu 22 %, weiter bevorzugt bis zu 20 %, und besonders bevorzugt bis zu 15 %. Der Umsetzungsgrad kann dabei beispielsweise durch quantitative Bestimmung nicht umgesetzter monomerer Asparaginsäure ermittelt werden. Hierzu wird eine definierte Menge X [g] des nach der Vorkondensation erhaltenen Vorkondensats mit 1 N Salzsäure extrahiert, wodurch nicht umgesetzte monomere Asparaginsäure unter Bildung von Asparaginsäurehydrochlorid in Lösung gebracht wird. Durch flüssigchromatographische quantitative Bestimmung des Asparaginsäuregehaltes Y [g] des Extraktes lässt sich der Umsetzungsgrad U im Zusammenhang mit der vorliegenden Erfindung berechnen durch

$$U = (X - Y) / X$$

Alternativ lässt sich erfindungsgemäß der Umsetzungsgrad auch durch gravimetrische Bestimmung des in Wasser und Salzsäure unlöslichen Rückstandes, welcher überwiegend aus Polysuccinimid besteht, ermitteln (vgl. WO 1996/004330). Hierzu wird der in Wasser und Salzsäure unlösliche Rückstand bis zur Gewichtskonstanz bei 60 °C, 150 mbar getrocknet und gewogen. Über die ermittelte Masse R [g] des unlöslichen Rückstandes kann der Umsetzungsgrad berechnet werden durch

$$U = R / X$$

Bevorzugt wird im Zusammenhang mit der vorliegenden Erfindung der Umsetzungsgrad nach der zuerst genannten Methode durch flüssigchromatographische Bestimmung des Gehaltes an nicht umgesetzter monomerer Asparaginsäuregehaltes im Vorkondensat ermittelt.

Die hier verwendeten Begriffe "Vorkondensat" und "Vorkondensatsmischung" o.ä. sind, wie für den Fachmann ersichtlich, synonym zu verstehen.

Das nach Schritt (a) des erfindungsgemäßen Verfahrens erhaltene Vorkondensat kann optional in einem Schritt (b) noch vor Zugabe des sauren Katalysators in Schritt (c) abgekühlt werden, um mehr Sicherheit bei der Zugabe des sauren Katalysators zu erzeugen. Sinnvoll kann es im Zusammenhang mit der vorliegenden Erfindung insbesondere sein, die Temperatur des Vorkondensats auf eine Temperatur unterhalb der Siedetemperatur des zuzugebenden sauren Katalysators abzukühlen. Beispielsweise wird die Temperatur des Vorkondensats in Schritt (b) auf unter 120 °C, bevorzugt auf unter 100 °C abgekühlt.

Als saurer Katalysator, mit welchem das Vorkondensat (d.h. die Asparaginsäure/Polyasparatimid-Mischung) in Schritt (c) der erfindungsgemäßen Herstellverfahren kontaktiert wird, kommen beispielsweise organische Säuren wie Methansulfonsäure Amidosulfonsäure, p-Toluolsulfonsäure oder Isethionsäure; anorganische Säuren des Phosphors oder Schwefels wie Phosphorsäure, Phosphorige Säure, Hypophosphorige Säure, Schwefelsäure oder schweflige Säure; Halogenwasserstoffe wie Salzsäure, oder saure Salze der vorgenannten Säuren in Betracht. In einer Ausführungsform handelt es sich bei dem erfindungsgemäß einzusetzenden sauren Katalysator um Methansulfonsäure (MSA). Methansulfonsäure kann im Zusammenhang mit der vorliegenden Erfindung auch in Form ihrer Salze eingesetzt werden. Salze der Methansulfonsäure sind beispielsweise durch partielle oder vollständige Neutralisation von Methansulfonsäure mit Alkali- oder Erdalkalimetallhydroxiden, Ammoniumhydroxid, primären, sekundären oder tertiären aliphatischen Aminen oder heterocyclischen aromatischen Aminen wie Pyridin, Imidazol oder 1-Methylimidazol erhältlich. Die sekundären oder tertiären aliphatischen Amine können dabei auch in cyclischer Form vorliegen wie z.B. Piperidin. Die im Schritt (c) der erfindungsgemäßen Herstellverfahren eingesetzte Menge an saurem Katalysator (bspw. MSA) bezieht sich, sofern nicht anders angegeben, auf die in Schritt (a) eingesetzte Menge an Asparaginsäure. Erfindungsgemäß werden 1 bis 25 mol% an saurem Katalysator eingesetzt. Das heißt, dass wenn beispielsweise 10 mol Asparaginsäure in den erfindungsgemäßen Verfahren eingesetzt werden, werden 0,1 bis 2,5 mol saurer Katalysator eingesetzt. Bevorzugt werden 2 bis 20 mol%, besonders bevorzugt 3 bis 15 mol% oder 3 bis 10 mol% saurer Katalysator eingesetzt, jeweils bezogen auf die eingesetzte Menge Asparaginsäure (in mol).

Die Dosierung des sauren Katalysators (bspw. Methansulfonsäure) kann in einer Portion zu Beginn des Schrittes (c) der erfindungsgemäßen Verfahren erfolgen. Es ist aber auch möglich, die Säure (bspw. Methansulfonsäure) beginnend bei Schritt (c)in ein oder mehreren Portionen oder kontinuierlich über den gesamten Polykondensationsschritt (c) zu dosieren. Des Weiteren kann der saure Katalysator oder eine wässrige Lösung des sauren Katalysators auch in einer definierten Zeitspanne oder über den gesamten Kondensationsverlauf verteilt in mehreren Portionen oder in kontinuierlicher Form zu dem Reaktionsgemisch dosiert werden.

In Schritt (c) des erfindungsgemäßen Verfahrens kann optional auch noch zusätzlich Wasser eingesetzt werden, um den eingesetzten sauren Katalysator gleichmäßiger auf das pulverartige Vorkondensat zu verteilen. Das zusätzliche Wasser kann sowohl getrennt vom sauren Katalysator als auch als Mischung mit dem sauren Katalysator eingesetzt

werden.

Die Temperatur bei der Polykondensation während Schritt (d) der erfindungsgemäßen Herstellverfahren liegt bei 170 bis 250 °C, bevorzugt bei 180 bis 250 °C, weiter bevorzugt bei 200 bis 250 °C, besonders bevorzugt bei 200 bis 230 °C. Die im Zusammenhang mit der vorliegenden Erfindung angegebenen Temperaturen beziehen sich, sofern hier nicht anders angegeben, auf die jeweilige Reaktionstemperatur bei 1 bar Reaktionsdruck. Wie dem Fachmann klar ersichtlich, können bei entsprechender Erhöhung oder Erniedrigung des Drucks auch niedrigere bzw. höhere Temperaturen angelegt werden. Die Polykondensation wird idealerweise bis zur vollständigen Umsetzung der Reaktionspartner zu Polykondensaten gem.

Schritt (e)der erfindungsgemäßen Herstellverfahren durchgeführt, beispielsweise für einen Zeitraum von 1 Minute bis zu 50 Stunden. Vollständige Umsetzung bedeutet im Rahmen der vorliegenden Erfindung, dass die Restmenge an nicht umgesetzter Asparaginsäure $\leq$ 0,5 Gew% bezogen auf die eingesetzte Menge an Asparaginsäure beträgt.

Die Polykondensation (das Tempern) wird erfindungsgemäß beispielsweise und vorzugsweise im Vakuum oder unter Inertgasatmosphäre (z.B. $N_2$ oder Argon) durchgeführt. Die Polykondensation kann aber auch unter erhöhtem Druck oder in einem Gasstrom, z.B. Kohlendioxid, Luft, Sauerstoff oder Wasserdampf erfolgen. Je nach den gewählten Reaktionsbedingungen liegen die Reaktionszeiten für die Kondensation im Allgemeinen zwischen 1 Minute und 50 Stunden. Die für die Polykondensation von Asparaginsäure/Polyaspartimid erforderliche Menge an saurem Katalysator (bspw. MSA) kann auf unterschiedliche Weise zugegeben werden. So kann die Polykondensation beispielsweise in fester Phase durchgeführt werden, in dem man zunächst eine wässrige Lösung bzw. Suspension von Asparaginsäure/Polyaspartimid und saurem Katalysator herstellt und die Lösung zur Trockne eindampft. Hierbei kann bereits eine Kondensation einsetzen. Des Weiteren kann der saure Katalysator oder eine wässrige Lösung des sauren Katalysators auch in einer definierten Zeitspanne oder über den gesamten Kondensationsverlauf verteilt in mehreren Portionen oder in kontinuierlicher Form zu dem Reaktionsgemisch dosiert werden. Zur Durchführung der Polykondensation eignen sich alle dem Fachmann auf diesem Gebiet bekannten kontinuierlich oder absatzweise (batch-weise) betreibbaren Reaktoren und Apparaturen wie beispielsweise Heizbänder, Kneter, Mischer, Schaufeltrockner, Zähphasentrockner, Hochviskosreaktoren, Extruder, Drehrohröfen und andere beheizbare Vorrichtungen, in denen die Kondensation von Feststoffen unter Entfernung von Reaktionswasser durchgeführt werden kann. In Betracht kommen beispielsweise auch kontinuierlich oder absatzweise (batch-weise) arbeitende Apparaturen mit ein oder mehreren Wellen zur Durchmischung oder Durchmischung und Selbstreinigung. Derartige Apparate werden beispielsweise von der Firma LIST AG, Arisdorf, Schweiz unter dem Handelsnamen Discotherm® B, ORP (Opposite Rotating Processor) oder CRP (Co-Rotating Processor) oder von der Firma Buss-SMS-Canzler unter dem Handelsnamen Reactotherm® angeboten. Für die Kondensation eignen sich beispielsweise auch konvektive Apparaturen wie Wirbelschichtreaktoren. Polykondensate mit niedrigem Molekulargewicht können in auch druckdicht verschlossenen Gefäßen hergestellt werden, indem das entstehende Reaktionswasser nicht oder nur teilweise entfernt wird. Die Polykondensation kann grundsätzlich auch in Apparaturen erfolgen, die direkt beheizt sind, z.B. durch elektrische Beheizung, Dampf, Wälzgas, Thermalöl oder Salzbäder. Die Polykondensation kann auch in Apparaturen erfolgen, bei denen die notwendige thermische Energie hauptsächlich durch Strahlung definierter Frequenz (z.B. Infrarot, Hochfrequenz, Mikrowelle) zugeführt wird.

Bei der thermischen Polykondensation von Asparaginsäure mit saurem Katalysator (bspw. Methansulfonsäure) fällt das Polykondensat im Allgemeinen in Form der wasserunlöslichen Polyaspartimide an. Die eingesetzten kleinen Mengen an saurem Katalysator können dabei im Produkt verbleiben, ohne dass Nachteile in der Anwendbarkeit entstehen. Falls es jedoch erwünscht ist, können die Polykondensate der Asparaginsäure von dem sauren Katalysator beispielsweise dadurch gereinigt werden, in dem das wasserunlösliche Polyaspartimid zerkleinert und mit Wasser bei Temperaturen von 10 °C bis 100 °C extrahiert wird. Dabei wird der eingesetzte saure Katalysator ausgewaschen. Nicht umgesetzte Asparaginsäure lässt sich durch Extraktion mit 1N Salzsäure leicht herauslösen.

Nach der Polykondensation gemäß Schritt (d) der erfindungsgemäßen Verfahren wird das erhaltene Polykondensat unter Zugabe einer Base hydrolysiert. Die hier erfindungsgemäß einzusetzende Base kann im Prinzip jede für den Fachmann geeignete Base sein. Solche Basen umfassen unter anderem Alkali- und Erdalkalimetallbasen wie Natronlauge, Kalilauge, Calciumhydroxid oder Bariumhydroxid; Carbonate wie Soda und Kaliumcarbonat; Ammoniak und primäre, sekundäre oder tertiäre Amine; andere Basen mit primären, sekundären oder tertiären Aminogruppen.

Die Polyasparaginsäuren (bzw. deren Salze wie oben beschrieben) werden aus den Polykondensaten gemäß Schritt (d) vorzugsweise dadurch erhalten, dass man die Polykondensate in Wasser aufschlämmt und bei Temperaturen vorzugsweise im Bereich von 0 °C bis 90 °C unter Zugabe einer hier beschriebenen geeigneten Base hydrolysiert und neutralisiert. Die Hydrolyse und Neutralisation findet vorzugsweise bei pH-Werten von 8 bis 10 statt. Vorteilhaft im Sinne der Erfindung ist es auch, die Kondensation und die Hydrolyse apparativ miteinander zu koppeln, indem man bspw. die Hydrolyse im selben Gefäß/Reaktor/Apparat durchführt wie die vorhergehende Kondensation. Anschließend können die so erhaltenen Salze der Polyasparaginsäure noch angesäuert werden, um die entsprechende Säureform zu erhalten wie hierin beschrieben.

Die erfindungsgemäß hergestellten/herstellbaren bzw. einzusetzenden Polyasparaginsäuren bzw. ihre Salze können als wässrige Lösung oder in fester Form, z.B. in Pulver- oder Granulatform verwendet werden. Wie dem Fachmann bekannt ist, kann man die Pulver- oder Granulatform beispielsweise durch Sprühtrocknung, Sprühgranulierung, Wirbelschicht-Sprü hgranulierung, Strahlschichtgranulierung, Walzentrockung oder Gefriertrocknung der wässrigen Lösung der Polyasparaginsäuren bzw. ihren Salzen erhalten.

Die erfindungsgemäß herzustellende Polyasparaginsäure kann unterschiedliche gewichtsmittlere Molekulargewichte haben, bevorzugt 6.000 bis 30.000 g/mol. Das gewichtsmittlere Molekulargewicht kann dabei eingestellt werden in Abhängigkeit von der Menge des eingesetzten sauren Katalysators in Schritt (c) der erfindungsgemäßen Herstellverfahren, sowie von der angelegten Temperatur während der Polykondensation in Schritt (d)Hierbei liegt das Temperaturoptimum zum Erhalt von Polyasparaginsäuren mit gewichtsmittlerem Molekulargewicht von 6.000 bis 30.000 g/mol zwischen 200 °C und 230 °C. Niedrigere oder höhere Temperaturen haben auch beim Einsatz größerer Mengen an Katalysator (z. B. > 25 mol% Methansulfonsäure) niedrigere gewichtsmittlere Molekulargewichte und/oder eine geringere Produktausbeute zur Folge. Bei höheren Temperaturen besteht außerdem die Gefahr einer zunehmenden thermischen Zersetzung des sauren Katalysators mit negativen Auswirkungen auf Ausbeute, Umsetzungsgrad und Molekulargewichsteinstellung. Der Einsatz zu großer Mengen an saurem Katalysator hat zudem den generellen Nachteil, dass dann relevante Mengen an saurem Katalysator im Produkt verbleiben, welche wiederum die Anwendbarkeit des Produkts einschränken können.

Die im Zusammenhang mit der vorliegenden Erfindung angegebenen Molekularmassen Mw können unter anderem mit Hilfe einer Kalibrierkurve, die mit eng verteilten Natriumpolyacrylat-Standards der Fa. Polymer Standard Service mit Molekulargewichten von M = 1.250 g/mol bis M = 130.500 g/mol erstellt werden kann, berechnet werden, wie dem Fachmann bekannt und hier beschrieben ist. Für die Kalibrierung können unter anderem zusätzlich Na-Acrylat mit einem Molekulargewicht von M = 96 und ein PEG-Standard mit M = 620, der mit Na-PAA M = 150 gleichgesetzt wird, benutzt werden.

Bei den hier bereitgestellten und beschriebenen erfindungsgemäßen Verfahren zur Herstellung von Polyasparaginsäure ist es im Rahmen der Erfindung auch möglich, in Schritt (c) neben dem genannten sauren Katalysator (bspw. MSA) auch noch zusätzliche Säuren mit einzubringen. Beispielsweise kann hier zusätzlich eine Carbonsäure (Monocarbonsäure oder Polycarbonsäure), eine Hydroxycarbonsäure und/oder eine Aminosäure (außer Asparaginsäure) eingesetzt werden. Solche Carbonsäuren oder Hydroxycarbonsäuren sind bevorzugt mehrbasisch. In diesem Zusammenhang können also bei der erfindungsgemäßen Herstellung der Polyasparaginsäure im Schritt (c)zusätzlich zum genannten und hier beschriebenen sauren Katalysator mehrbasische Carbonsäuren und ihre Anhydride eingesetzt werden, z.B. Oxalsäure, Adipinsäure, Fumarsäure, Maleinsäure, Maleinsäureanhydrid, Itaconsäure, Aconitsäure, Bernsteinsäure, Bernsteinsäureanhydrid, Malonsäure, Korksäure, Azelainsäure, Diglykolsäure, Glutarsäure, $C_1$-$C_{26}$ Alkylbernsteinsäuren (z.B. Octylbernsteinsäure), $C_2$-$C_{26}$ Alkenylbernsteinsäuren (z.B. Octenylbernsteinsäure), 1,2,3-Propantricarbonsäure, 1,1,3,3-Propantetracarbonsäure, 1,1,2,2-Ethantetracarbonsäure, 1,2,3,4-Butantetracarbonsäure, 1,2,2,3-Propantetracarbonsäure, 1,3,3,5-Pentantetracarbonsäure Trimellitsäure oder Trimellitsäureanhydrid. Ferner können in diesem Zusammenhang mehrbasische Hydroxycarbonsäuren eingesetzt werden, z.B. Citronensäure, Isocitronensäure, Schleimsäure, Weinsäure, Tartronsäure, oder Äpfelsäure. Als Aminosäuren können in diesem Zusammenhang unter anderem Aminocarbonsäuren (z.B. Glutaminsäure, Cystein), basische Diaminocarbonsäuren (z.B. Lysin, Arginin, Histidin, Aminocaprlactam), neutrale Aminosäuren (z.B. Glycin, Alanin, Valin, Leucin, Isoleucin, Methionin, Cystein, Norleucin, Caprolactam, Asparagin, Isoasparagin, Glutamin, Isoglutamin), Aminosulfonsäuren (z.B. Taurin), Hydroxylaminosäuren (z.B. Hydroxyprolin, Serin, Threonin), Iminocarbonsäuren (z.B. Prolin, Iminodiessigsäure), oder aromatische und heterocyclische Aminosäuren (z.B. Anthranilsäure, Tryptophan, Tyrosin, Histidin) eingesetzt werden, aber nicht Asparaginsäure. Bevorzugte carboxylhaltige Verbindungen (ii) im Zusammenhang mit der Herstellung der erfindungsgemäß einzusetzenden modifizierten Polyasparaginsäuren sind 1,2,3,4-Butantetracarbonsäure, Zitronensäure, Glycin, Glutaminsäure, Itaconsäure, Bernsteinsäure, Taurin, Maleinsäure und Glutarsäure, besonders bevorzugt 1,2,3,4-Butantetracarbonsäure, Zitronensäure, Glycin und Glutaminsäure.

Die erfindungsgemäß herstellbaren Polyasparaginsäuren zeichnen sich unter anderem durch ihre sehr gute belagsinhibierende und dispergierende Wirkung aus, und zwar sowohl gegenüber anorganischen als auch organischen Belägen. Insbesondere inhibieren sie Beläge aus Calcium- und Magnesiumcarbonat und Calcium- und Magnesiumphosphaten und - phosphonaten. Zusätzlich verhindern sie Ablagerungen, die aus den Schmutzbestandteilen einer Spülflotte stammen, wie Fett-, Eiweiß- und Stärkebeläge.

Die vorliegende Offenbarung betrifft daher auch die Verwendung der erfindungsgemäß herstellbaren Polyasparaginsäuren als Belagsinhibitoren oder Dispergiermitteln. Die Polyasparaginsäuren können dabei sowohl als Zusatzstoff in Reinigungs-, Spülmittel- (insbesondere maschinelle Geschirrspülmittel-) oder Waschmitteln, als auch als Belagsinhibitoren oder Dispergiermittel in wasserführenden Systemen verwendet werden wie hier dargestellt und beschrieben.

Auch betrifft die vorliegende Offenbarung Zusammensetzungen - insbesondere Reinigungsmittel-, Spülmittel- und Waschmittelzusammensetzungen -, welche Polyasparaginsäuren enthalten, die durch das erfindungsgemäße Verfahren herstellbar bzw. erhältlich sind. Eine Ausführungsform der vorliegenden Offenbarung betrifft insbesondere Spülmittelzusammensetzungen für maschinelles Geschirrspülen, welche die Polyasparaginsäuren wie hier beschrieben

enthalten. Solche Zusammensetzungen enthalten neben den Polyasparaginsäuren der Erfindung weitere Bestandteile wie bspw. Lösemittel, Tenside oder Komplexbildner. Die Polyasparaginsäuren der Erfindung können nach dem Fachmann bekannten Verfahren direkt in die Formulierungen (Gemische) in ihren verschiedenen Darreichungsformen eingearbeitet werden. Hierbei sind beispielsweise feste Formulierungen wie Pulver, Tabletten, gelartige und flüssige Formulierungen zu nennen. Die maschinellen Geschirrspülmittel-zusammensetzungen und die anderen Reinigungsmittel-, Spülmittel- und Waschmittel-zusammensetzungen können in flüssige, gelartiger oder fester Form, ein- oder mehrphasig, als Tabletten oder in Form anderer Dosiereinheiten, verpackt oder unverpackt bereitgestellt werden. Die erfindungsgemäß herstellbaren Polyasparaginsäuren können in diesem Zusammenhang sowohl in mehrkomponentigen Produktsystemen (getrennter Einsatz von Reiniger, Klarspüler und Regeneriersalz), als auch in solchen Geschirrspülmitteln eingesetzt werden, in denen die Funktionen von Reiniger, Klarspülmittel und Regeneriersalz in einem Produkt vereinigt sind (bspw. 3-in-1-Produkte, 6-in-1-Produkte, 9-in-1-Produkte, all-in-one Produkte).

Die vorliegende Offenbarung umfasst daher ferner Zusammensetzungen umfassend die nach dem erfindungsgemäßen Verfahren herstellbare bzw. hergestellte Polyasparaginsäure. In einer Ausführungsform handelt es sich hierbei um Spülmittelzusammensetzungen, insbesondere solche, welche für das maschinelle Geschirrspülen (ADW) geeignet sind.

Spülmittelzusammensetzungen umfassen beispielsweise

(a) 1-20 Gew%, bevorzugt 1-15 Gew%, besonders bevorzugt 2-12 Gew% der hier beschriebenen und erfindungsgemäß hergestellten bzw. herstellbaren Polyasparaginsäure;
(b) 0-50 Gew% Komplexbildner;
(c) 0,1-80 Gew% Builder und/oder Co-Builder;
(d) 0,1-20 Gew% nichtionische Tenside;
(e) 0-30 Gew% Bleichmittel, Bleichaktivatoren und Bleichkatalysatoren;
(f) 0-8 Gew% Enzyme; und
(g) 0-50 Gew% Zusatzstoffe.

Als Komplexbildner (b) können beispielsweise eingesetzt werden: Nitrilotriessigsäure, Ethylendiamintetraessigsäure, Diethylentriaminpentaessigsäure, Hydroxyethylethylendiamintriessigsäure, Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure, sowie jeweils deren Salze. Bevorzugte Komplexbildner (b) sind Methylglycindiessigsäure und Glutaminsäurediessigsäure und deren Salze. Besonders bevorzugte Komplexbildner (b) sind Methylglycindiessigsäure und deren Salze, insbesondere deren Mono-, Di- und Tri- Natrium-, Kalium-, Lithium- und Ammoniumsalze. Die Salze der Methylglycindiessigsäure können als Racemat vorliegen, d.h. D- und L-Enantiomere liegen in äquimolarer Mischung vor oder ein Enantiomer, z.B. das L-Enantiomer, kann im Überschuss vorliegen. Bevorzugt sind 3 bis 50 Gew% Komplexbildner (b).

Als Builder und/oder Co-Builder (c) können insbesondere wasserlösliche oder wasserunlösliche Substanzen, deren Hauptaufgabe im Binden von Calcium- und Magnesiumionen besteht, eingesetzt werden. Dies können niedermolekulare Carbonsäuren sowie deren Salze wie Alkalicitrate sein, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und $\alpha$-Hydroxypropionsäure.

Eine weitere Substanzklasse mit Cobuildereigenschaften, welche in den Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Unter anderem können als Builder Silikate eingesetzt werden. Enthalten sein können kristalline schichtförmige Silikate mit der allgemeinen Formel $NaMSi_xO_{2x+1}\ yH_2O$, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem $SiO_2 : Na_2O$-Verhältnis von 1 bis 3,5, vorzugsweise von 1,6 bis 3 und insbesondere von 2 bis 2,8 zum Einsatz kommen.

Weiterhin können als Builder und/oder Co-Builder (c) im Zusammenhang mit der Spülmittelzusammensetzung

Carbonate und Hydrogencarbonate eingesetzt werden, unter welchen die Alkalisalze, insbesondere Natriumsalze, bevorzugt werden.

Weiterhin können als Cobuilder Homo- und Copolymere der Acrylsäure oder der Methacrylsäure eingesetzt werden, die bevorzugt eine gewichtsmittlere Molmasse von 2.000 bis 50.000 g/mol aufweisen. Als Comonomere eignen sich insbesondere monoethylenisch ungesättigte Dicarbonsäuren wie Maleinsäure, Fumarsäure und Itaconsäure sowie deren Anhydride wie Maleinsäureanhydrid. Es eignen sich auch Sulfonsäuregruppen haltige Comonomere wie 2-Acrylamido-2-methylpropansulfonsäure, Allylsulfonsäure und Methansulfonsäure. Auch hydrophobe Comonomere sind geeignet wie beispielsweise Isobuten, Diisobuten, Styrol, alpha-Olefine mit 10 oder mehr Kohlenstoffatomen. Hydrophile Monomere mit Hydroxyfunktion oder Alkylenoxidgruppen können ebenfalls als Comonomere verwendet werden. Beispielsweise seien genannt: Allylalkohol und Isoprenol sowie deren Alkoxylate und Methoxypolyethylenglykol(meth)acrylat.

Bevorzugte Mengen sind für Builder und/oder Co-Builder im Zusammenhang mit der Spülmittelzusammensetzung 5 bis 80 Gew%, besonders bevorzugt 10 bis 75 Gew%, 15 bis 70 Gew% oder 15 bis 65 Gew%.

Als nichtionische Tenside (d) im Zusamenhang mit der Spülmittelzusammensetzung können beispielsweise schwach oder niedrig schäumende nichtionische Tenside eingesetzt werden. Diese können in Anteilen von 0,1 bis 20 Gew%, bevorzugt von 0,1 bis 15 Gew%, besonders bevorzugt von 0,25 bis 10 Gew% oder 0,5 bis 10 Gew% vorliegen. Geeignete nichtionische Tenside umfassen unter anderem Tenside der allgemeinen Formel (I)

$$R^1\text{-O-}(CH_2CH_2O)_a\text{-}(CHR^2CH_2O)_b\text{-}R^3 \qquad (I),$$

worin $R^1$ ein linearer oder verzweigter Alkylrest mit 8 bis 22 C-Atomen ist,

$R^2$ und $R^3$ unabhängig voneinander Wasserstoff oder ein linearer oder verzweigter Alkylrest mit 1 bis 10 C-Atomen oder H sind, wobei $R^2$ bevorzugt Methyl ist, und
a und b unabhängig voneinander 0 bis 300 sind. Bevorzugt ist a = 1 - 100 und b = 0 - 30.

Auch geeignet sind Tenside der Formel (II)

$$R^4\text{-O-}[CH_2CH(CH_3)O]_c[CH_2CH_2O]_d[CH_2CH(CH_3)O]_eCH_2CH(OH)R^5 \qquad (II),$$

worin $R^4$ für einen linearen oder verzweigten aliphatischen Kohlenwasserstoffrest mit 4 bis 22 Kohlenstoffatomen oder Mischungen hieraus steht,

$R^5$ einen linearen oder verzweigten Kohlenwasserstoffrest mit 2 bis 26 Kohlenstoffatomen oder Mischungen hieraus bezeichnet,
c und e für Werte zwischen 0 und 40 steht, und
d für einen Wert von mindestens 15 steht.

Auch geeignet sind Tenside der Formel (III)

$$R^6O\text{-}(CH_2CHR^7O)_f(CH_2CH_2O)_g(CH_2CHR^8O)_h\text{-CO-}R^9 \qquad (III),$$

worin $R^6$ ein verzweigter oder unverzweigter Alkylrest mit 8 bis 16 Kohlenstoffatomen ist,

$R^7$, $R^8$ unabhängig voneinander H oder ein verzweigter oder unverzweigter Alkylrest mit 1 bis 5 Kohlenstoffatomen sind,
$R^9$ ein unverzweigter Alkylrest mit 5 bis 17 Kohlenstoffatomen ist,
f, h unabhängig voneinander eine Zahl von 1 bi 5 sind, und
g eine Zahl von 13 bis 35 ist.

Die Tenside der Formeln (I), (II) und (III) können sowohl statistische Copolymere als auch Block-Copolymere sein, bevorzugt sind sie als Block-Copolymere.

Weiterhin können Di- und Multiblockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside sind in EP-A 851 023 sowie in DE-A 198 19 187 offenbart.

Es können auch Gemische mehrerer verschiedener nichtionischer Tenside enthalten sein. Die Spülmittelzusammensetzungen können weiterhin anionische oder zwitterionische Tenside enthalten, bevorzugt in Mischung mit nichtionischen Tensiden. Geeignete anionische und zwitterionischer Tenside sind ebenfalls in EP-A 851 023 sowie DE-A 198 19 187 genannt.

Als Bleichmittel und Bleichaktivatoren (e) können im Zusammenhang mit den Spülmittelzusammensetzungen dem Fachmann bekannte Vertreter eingesetzt werden. Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat. Ebenfalls als Sauerstoffbleichmittel einsetzbar sind Persulfate und Wasserstoffperoxid. Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure. Außerdem können auch folgende Sauerstoffbleichmittel in der Spülmittelzusammensetzung Verwendung finden: Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind. Sauerstoffbleichmittel können in Mengen von im Allgemeinen 0,1 bis 30 Gew%, bevorzugt von 1 bis 20 Gew%, besonders bevorzugt von 3 bis 15 Gew%, bezogen auf die gesamte Spülmittelzusammensetzung, eingesetzt werden. Chlorhaltige Bleichmittel sowie die Kombination von chlorhaltigen Bleichmittel mit peroxidhaltigen Bleichmitteln können im Zusammenhang mit den Spülmittelzusammensetzungen ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind hierbei Natriumhypochlorit, Calciumhypochlorit, Kaliumhypochlorit, Magnesiumhypochlorit, Kaliumdichloroisocyanurat oder Natriumdichloroisocyanurat. Chlorhaltige Bleichmittel können in diesem Zusammenhang in Mengen von 0,1 bis 30 Gew%, bevorzugt von 0,1 bis 20 Gew%, bevorzugt von 0,2 bis 10 Gew%, besonders bevorzugt von 0,3 bis 8 Gew%, bezogen auf die gesamte Spülmittelzusammensetzung, eingesetzt werden.

Weiterhin können in geringen Mengen Bleichmittelstabilisatoren wie beispielsweise Phosphonate, Borate, Metaborate, Metasilikate oder Magnesiumsalze zugegeben werden. Bleichaktivatoren können Verbindungen sein, welche unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind hierbei unter anderem Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze). Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA, und TMAQ. Bleichaktivatoren können in Mengen von 0,1 bis 30 Gew%, bevorzugt von 0,1 bis 10 Gew%, bevorzugt von 1 bis 9 Gew%, besonders bevorzugt von 1,5 bis 8 Gew%, bezogen auf die gesamte Spülmittelzusammensetzung eingesetzt werden.

Zusätzlich zu den konventionellen Bleichaktivatoren oder an deren Stelle können auch sogenannte Bleichkatalysatoren in Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente (f) können die Spülmittelzusammensetzungen 0 bis 8 Gew.% Enzyme enthalten. Falls die Spülmittelzusammensetzungen Enzyme enthalten, enthalten sie diese bevorzugt in Mengen von 0,1 bis 8 Gew.%. Dem Spülmittel können Enzyme zugesetzt werden, um die Reinigungsleistung zu steigern oder unter milderen Bedingungen (z.B. bei niedrigen Temperaturen) die Reinigungsleistung in gleicher Qualität zu gewährleisten. Eingesetzt werden können die Enzyme in freier oder auf einem Träger chemisch oder physikalisch immobilisierter Form oder in verkapselter Form. Zu den am häufigsten verwendeten Enzymen gehören in diesem Zusammenhang Lipasen, Amylasen, Cellulasen und Proteasen. Weiterhin können beispielsweise auch Esterasen, Pectinasen, Lactasen und Peroxidasen eingesetzt werden. Bevorzugt werden Amylasen und Proteasen eingesetzt.

Als Zusatzstoffe (g) können im Zusammenhang mit den Spülmittelzusammensetzungen beispielsweise anionische oder zwitterionische Tenside, Alkaliträger, polymere Dispergiermittel, Korrosionsinhibitoren, Entschäumer, Farbstoffe, Duftstoffe, Füllstoffe, Tablettensprengmittel, organische Lösungsmittel, Tablettierhilfsmittel, Disintegrationsmittel, Verdicker, Löslichkeitsvermittler, oder Wasser eingesetzt werden. Als Alkaliträger können beispielsweise neben den

bereits bei den Buildersubstanzen genannten Ammonium- oder Alkalimetallcarbonaten, Ammonium- oder Alkalimetallhydrogencarbonaten und Ammonium- oder Alkalimetallsesquicarbonaten auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können unter anderem Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, welche sich durch Trübungen, Irisieren, Schlieren und Linien auf den Gläsern bemerkbar macht, werden bevorzugt Glaskorrosionsinhibitoren eingesetzt. Bevorzugte Glaskorrosionsinhibitoren sind beispielsweise Magnesium- Zink und Bismuth-Salze und Komplexe.

Paraffinöle und Silikonöle können optional als Entschäumer und zum Schutz von Kunststoff- und Metalloberflächen eingesetzt werden. Entschäumer werden bevorzugt in Anteilen von 0,001 Gew% bis 5 Gew% eingesetzt. Außerdem können Farbstoffe wie beispielsweise Patentblau, Konservierungsmittel wie beispielsweise Kathon CG, Parfüme und sonstige Duftstoffe der Reinigungsformulierung zugesetzt werden.

Ein geeigneter Füllstoff im Zusammenhang mit den Spülmittelzusammenstzungen ist beispielsweise Natriumsulfat.

Als weitere mögliche Zusatzstoffe sind amphotere und kationische Polymere zu nennen.

In einer Ausführungsform ist die Spülmittelzusammensetzung phosphatfrei.

Unter dem Begriff "phosphatfrei" sind in diesem Zusammenhang auch solche Spülmittelzusammensetzungen umfasst, welche im Wesentlichen kein Phosphat, d.h. Phosphat in technisch unwirksamen Mengen enthalten. Dies umfasst insbesondere Zusammensetzungen mit weniger als 1,0 Gew%, bevorzugt weniger als 0,5 Gew% Phosphat bezogen auf die Gesamtzusammensetzung.

Die vorliegende Offenbarung umfasst ferner die Verwendung der nach dem erfindungsgemäßen herstellbaren bzw. hergestellten Polyasparaginsäure bzw. dieser umfassenden Zusammensetzungen als Zusatzstoff in Spülmitteln, insbesondere in Spülmitteln für maschinelles Geschirrspülen (ADW).

Ein weiterer Gegenstand der vorliegenden Offfenbarung ist die Verwendung der erfindungsgemäß herstellbaren Polyasparaginsäuren als Waschkraftverstärker, Vergrauungsinhibitor und Inkrustationsinihibitor in Wasch- und Reinigungsmittelzusammensetzungen (z.B. als Additive für Wasch- und Reinigungsmittel von Textilien, Waschhilfsmittel, Wäschenachbehandlungsmittel).

Die vorliegende Offenbarung betrifft ferner Reinigungs- und Waschmittelzusammensetzungen, welche die erfindungsgemäß herstellbaren Polyasparaginsäuren umfassen. Die Wasch- und Reinigungsmittelzusammensetzungen, in denen die erfindungsgemäßen Polyasparaginsäuren eingesetzt werden können, können pulver-, granulat-, tabletten-, pasten-, gelförmig oder flüssig sein. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, und Bügelhilfen. Sie enthalten mindestens 0,1 Gew%, bevorzugt zwischen 0,1 und 10 Gew% und besonders bevorzugt 0,2 bis 5 Gew% der erfindungsgemäß herstellbaren Polyasparaginsäuren. Die Zusammensetzungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe und -zusammensetzungen werden im Folgenden beschrieben.

Die vorliegende Offenbarung betrifft ferner flüssige oder gelförmige Wasch- und Reinigungsmittelzusammensetzungen, enthaltend

($A_L$) 0,1 bis 20 Gew% mindestens einer hier beschriebenen und erfindungsgemäß einzusetzenden Polyasparaginsäure,
($B_L$) 1 bis 80 Gew% Tenside,
($C_L$) 0,1 bis 50 Gew% Builder, Cobuilder und/oder Komplexbildner,
($D_L$) 0 bis 20 Gew% Bleichsystem,
($E_L$) 0,1 bis 60 Gew% Wasch- oder Reinigungsmittelinhaltsstoffe, d.h. andere übliche Inhaltsstoffe wie Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine, und
($F_L$) 0 bis 98,7 Gew% Wasser.

Die Summe ($A_L$) bis ($F_L$) beträgt 100 Gew%.

Die Mengenverhältnisse der einzelnen Komponenten werden vom Fachmann abhängig vom jeweiligen Einsatzgebiet der flüssigen und gelförmigen Wasch- und Reinigungsmittelzusammensetzung eingestellt.

Die vorliegende Offenbarung betrifft ferner feste Wasch- und Reinigungsmittelzusammensetzungen, enthaltend

($A_F$) 0,1 bis 20 Gew% mindestens einer hier beschriebenen und erfindungsgemäß einzusetzenden Polyasparaginsäure,
($B_F$) 1 bis 50 Gew% Tenside,
($C_F$) 0,1 bis 70 Gew% Builder, Cobuilder und/oder Komplexbildner,
($D_F$) 0 bis 30 Gew% Bleichsystem, und
($E_F$) 0,1 bis 70 Gew% Wasch- oder Reinigungsmittelinhaltsstoffe, d.h. andere übliche Inhaltsstoffe wie Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser.

Die Summe der Komponenten aus ($A_F$) bis ($E_F$) ergibt 100 Gew%.

Die festen Wasch- und Reinigungsmittelzusammensetzungen können beispielsweise in Pulver-, Granulat-, Extrudat- oder Tablettenform vorliegen.

Die Mengenverhältnisse der einzelnen Komponenten werden vom Fachmann abhängig vom jeweiligen Einsatzgebiet der festen Wasch- und Reinigungsmittelzusammensetzung eingestellt.

Als Tenside ($B_L$ oder $B_F$) können beispielsweise nichtionische Tenside (Niotenside, NIS) eingesetzt werden. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12}$-$C_{14}$-Alkohole mit 3 EO, 5 EO, 7 EO oder 9 EO, $C_9$-$C_{11}$-Alkohol mit 7 EO, $C_{13}$-$C_{15}$-Alkohole mit 3 EO, 5 EO, 7 EO oder 9 EO, $C_{12}$-$C_{18}$-Alkohole mit 3 EO, 5 EO, 7 EO oder 9 EO und Mischungen aus diesen, wie Mischungen aus $C_{12}$-$C_{14}$-Alkohol mit 3 EO und $C_{12}$-$C_{18}$-Alkohol mit 7 EO, 2 Propylheptanol mit 3 bis 9 EO. Mischungen aus kurkettigen Alkoholethoxilaten (z. B. 2-Propylheptanol x 7 EO) und langkettigen Alkoholethoxilaten (z. B. C16,18 x 7 EO). Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel (V)

$$R^{10}O(G)_i \qquad (V)$$

eingesetzt werden, worin $R^{10}$ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad i, der die Verteilung von Monoglykosiden und Oligoglykosiden angibt, ist eine beliebige Zahl zwischen 1 und 10; vorzugsweise liegt i bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können in diesem Zusammenhang geeignet sein. Die Menge (das Gewicht) dieser nichtionischen Tenside beträgt vorzugsweise nicht mehr als die der ethoxylierten Fettalkohole, insbesondere nicht mehr als die Hälfte davon.

Weitere geeignete Tenside ($B_L$ oder $B_F$) sind Polyhydroxyfettsäureamide der Formel (VI)

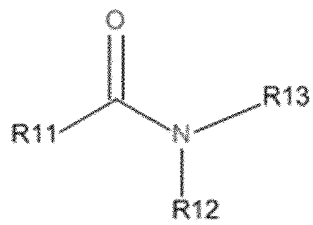

(VI),

worin R11C(=O) für einen aliphatischen Acylrest mit 6 bis 22 Kohlenstoffatomen, R12 für Wasserstoff, einen Alkyl- oder Hydroxyalkylrest mit 1 bis 4 Kohlenstoffatomen und R13 für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VII)

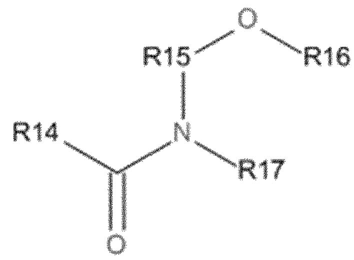

(VII),

worin R14 für einen linearen oder verzweigten Alkyl- oder Alkenylrest mit 7 bis 12 Kohlenstoffatomen, R15 für einen linearen, verzweigten oder cyclischen Alkylenrest mit 2 bis 8 Kohlenstoffatomen oder einen Arylenrest mit 6 bis 8 Kohlenstoffatomen, und R16 für einen linearen, verzweigten oder cyclischen Alkylrest oder einen Arylrest oder einen Oxy-Alkylrest mit 1 bis 8 Kohlenstoffatomen steht, wobei $C_1$-$C_4$-Alkyl- oder Phenylreste bevorzugt sind, und R17 für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R17 wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO 95/07331 durch Umsetzung mit Fettsäuremethylestern in Gegenwart eines Alkoxids als Katalysator in die gewünschten Polyhydroxyfettsäureamide überführt werden.

Tenside ($B_L$ oder $B_F$) können auch anionische Tenside (Aniontenside) sein. Als anionische Tenside können beispielsweise solche vom Typ der Sulfonate und Sulfate eingesetzt. Als Tenside vom Sulfonat-Typ kommen dabei vorzugsweise $C_9$-$C_{13}$-Alkylbenzolsulfonate, Olefinsulfonate, d.h. Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus $C_{12}$-$C_{18}$-Alkanen beispielsweise durch Sulfochlorierung oder Sulfoxidation mit anschließender Hydrolyse bzw. Neutralisation gewonnen werden. Ebenso sind auch die Ester von $\alpha$-Sulfofettsäuren (Estersulfonate), zum Beispiel die $\alpha$-sulfonierten Methylester der hydrierten Kokos-, Palmkern- oder Talgfettsäuren geeignet. Weitere geeignete Aniontenside können sulfierte Fettsäureglycerinester sein. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden hierbei die Alkali- und insbesondere die Natriumsalze der Schwefelsäurehalbester der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten

Verbindungen auf der Basis von fettchemischen Rohstoffen. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten $C_7$-$C_{21}$-Alkohole, wie 2-Methylverzweigte $C_9$-$C_{11}$-Alkohole mit im Durchschnitt 3,5 Mol Ethylenoxid (EO) oder $C_{12}$-$C_{18}$-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew%, eingesetzt. Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$-$C_{18}$- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono- , Di- oder Triethanolamin, vorliegen. Vorzugsweise liegen die anionischen Tenside in Form ihrer Natrium- oder Kaliumsalze, insbesondere in Form der Natriumsalze vor.

Die Tenside ($B_L$ oder $B_F$) können auch kationische Tenside sein. Als besonders geeignete kationische Tenside seien hierbei beispielsweise genannt:

- $C_7$-$C_{25}$-Alkylamine;
- N,N-Dimethyl-N-(hydroxy-$C_7$-$C_{25}$-alkyl)ammoniumsalze;
- mit Alkylierungsmitteln quaternisierte Mono- und Di-($C_7$-$C_{25}$-alkyl)dimethylammoniumverbindungen;
- Esterquats, insbesondere quaternäre veresterte Mono-, Di- und Trialkanolamine, die mit $C_8$-$C_{22}$-Carbonsäuren verestert sind;
- Imidazolinquats, insbesondere 1-Alkylimidazoliniumsalze der Formeln VIII oder IX

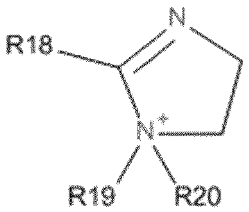

(VIII)

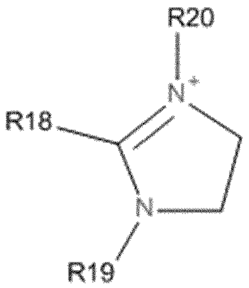

(IX),

wobei die Variablen folgende Bedeutung haben:

R18 $C_1$-$C_{25}$-Alkyl oder $C_2$-$C_{25}$-Alkenyl;
R19 $C_1$-$C_4$-Alkyl oder Hydroxy-$C_1$-$C_4$-alkyl;
R20 $C_1$-$C_4$-Alkyl, Hydroxy-$C_1$-$C_4$-alkyl oder ein Rest $R_1$-(CO)-$R^{21}$-$(CH_2)_j$- ($R^{21}$:-O- oder -NH-; j: 2 oder 3),

wobei mindestens ein Rest R18 ein $C_7$-$C_{22}$-Alkyl ist.

Die Tenside ($B_L$ oder $B_F$) können auch amphotere Tenside sein. Geeignete amphotere Tenside sind hierbei z.B. Alkylbetaine, Alkylamidbetaine, Aminopropionate, Aminoglycinate und amphotere Imidazoliumverbindungen.

Der Gehalt an Tensiden in flüssigen und gelförmigen Wasch- und Reinigungsmittelzusammensetzungen beträgt vorzugsweise 2 bis 75 Gew% und insbesondere 5 bis 65 Gew%, jeweils bezogen auf die gesamte Zusammensetzung. Der Gehalt an Tensiden in festen Wasch- und Reinigungsmittelzusammensetzungen beträgt vorzugsweise 2 bis 40 Gew% und insbesondere 5 bis 35 Gew%, jeweils bezogen auf die gesamte Zusammensetzung.

Als Builder, Cobuilder und/oder Komplexbildner ($C_L$ oder $C_F$) eignen sich unter anderem anorganische Builder wie:

- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. $\delta$- und $\beta$-$Na_2Si_2O_5$. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als Cobuilder und Komplexbildner ($C_L$ oder $C_F$) eignen sich unter anderem:

- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, $\beta$-Alanindiessigsäure, Ethylendiamintetraessigsäure, Serindiessigsäure, Isoserindiessigsäure, N-(2-Hydroxyethyl)-iminoessigsäure, Ethylendiamindibernsteinsäure, Glutaminsäurediessigsäure und Methyl- und Ethylglycindiessigsäure oder deren Alkalimetallsalze; . Besonders bevorzugte Komplexbildner sind Methylglycindiessigsäure und deren Salze, insbesondere deren Mono-, Di- und Tri-Natrium- , Kalium- , Lithium- und Ammoniumsalze. Die Salze der Methylglycindiessigsäure können als Racemat vorliegen, d.h. D- und L-Enantiomere liegen in äquimolarer Mischung vor oder ein Enantiomer, z.B. das L-Enantiomer, kann im Überschuss vorliegen.
- Oligomere und polymere Carbonsäuren, wie Homopolymere von Acrylsäure, Copolymere der Acrylsäure mit Sulfonsäuregruppen haltigen Comonomeren wie 2-Acrylamido-2-methylpropansulfonsäure (AMPS), Allylsulfonsäure und Vinylsulfonsäure, Oligomaleinsäuren, Copolymere der Maleinsäure mit Acrylsäure, Methacrylsäure oder $C_2$-$C_{22}$-Olefinen, z.B. Isobuten oder langkettigen $\alpha$-Olefinen, Vinyl-$C_1$-$C_8$-alkylether, Vinylacetat, Vinylpropionat, (Meth)Acrylsäureester von $C_1$-$C_8$-Alkoholen und Styrol. Bevorzugt sind die Homopolymere der Acrylsäure und Copolymere von Acrylsäure mit Maleinsäure oder AMPS. Die oligomeren und polymeren Carbonsäuren werden in Säureform oder als Natriumsalz eingesetzt;
- Phosphonsäuren wie z.B. 1-Hydroxyethylen(1,1-diphosphonsäure), Aminotri(methylenphosphonsäure), Ethylendiamintetra(methylenphosphonsäure) und Diethylentriaminpenta(methylenphosphonsäure) und deren Alkalimetallsalze.

Als Bleichmittel ($D_L$ oder $D_F$) kommen unter anderem in Betracht:
Natriumperborattetrahydrat, Natriumperboratmono-hydrat, Natriumpercarbonat, Peroxypyrophosphate, Citratperhydrate sowie persaure Salze oder Persäuren, wie Perbenzoate, Peroxophthalate, Diperazelainsäure, Phthaloiminopersäure oder Diperdodecandisäure. Um beim Waschen bei Temperaturen von 60 °C und darunter eine verbesserte Bleichwirkung zu erreichen, können Bleichaktivatoren in die Wasch- oder Reinigungsmittel eingearbeitet werden. Als Bleichaktivatoren können bspw. Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind unter anderem Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat

(nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Diacetoxy-2,5- dihydrofuran. Zusätzlich zu den konventionellen Bleichaktivatoren oder an deren Stelle können als Bestandteile ($D_L$) auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Übliche Inhaltsstoffe für Reinigungs- oder Waschmittelzusammensetzungen ($E_L$ oder $E_F$) sind dem Fachmann bekannt und umfassen beispielsweise Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine für flüssige oder gelartige Reinigungs- oder Waschmittelzusammensetzungen ($E_L$), oder Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser für feste Reinigungs- oder Waschmittelzusammensetzungen ($E_F$).

Als Enzyme ($E_L$ oder $E_F$) kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie *Bacillus subtilis, Bacillus licheniformis, Streptomyceus griseus* und *Humicola insolens* gewonnene enzymatische Wirkstoffe. Vorzugsweise werden Proteasen vom Subtilisin-Typ und insbesondere Proteasen, die aus *Bacillus lentus* gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen können hierbei eingesetzt werden. Zu den geeigneten Amylasen zählen insbesondere $\alpha$-Amylasen, Iso-Amylasen, Pullulanasen und Pektinasen. Als Cellulasen werden vorzugsweise Cellobiohydrolasen, Endoglucanasen und $\beta$-Glucosidasen, die auch Cellobiasen genannt werden, bzw. Mischungen aus diesen eingesetzt. Da sich verschiedene Cellulase-Typen durch ihre CMCase und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2,5 Gew.-% betragen, jeweils bezogen auf die Gesamtformulierung.

Geeignete Vergrauungsinhibitoren ($E_L$ oder $E_F$) sind beispielsweise Carboxymethylcellulose, Pfropfpolymere von Vinylacetat auf Polyethylenglykol, und Alkoxylate des Polyethylenimins. Als Verdicker ($E_L$) können sogenannte Assoziativverdicker verwendet werden. Geeignete Beispiele für Verdicker sind dem Fachmann bekannt unter anderem in WO 2009/019225 A2, EP 013 836 oder WO 2006/016035 beschrieben.

Optische Aufheller (sogenannte "Weißtöner") ($E_L$ oder $E_F$) können den flüssigen Wasch- oder Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Als Farbübertragungsinhibitoren ($E_L$ oder $E_F$) geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im Übrigen allgemein bekannt. Detaillierte Beschreibungen sind z. B. in den WO

99/06524 und WO 99/04313; in Liquid Detergents, Editor: Kuo-Yann Lai, Surfactant Sci. Ser., Vol. 67, Marcel Decker, New York, 1997, p. 272-304, zu finden. Weitere detaillierte Beschreibungen der Wasch- und Reinigungsmittelinhaltsstoffe finden sich bspw. in: Handbook of Detergents, Part D: Formulation, Surfactant Sci Ser, Vol. 128, Editor: Michael S. Showell, CRC Press 2006; Liquid Detergents sec. Edition, Surfactant Sci Ser, Vol. 129, Editor: Kuo-Yann Lai, CRC Press 2006; oder Waschmittel: Chemie, Umwelt, Nachhaltigkeit, Günter Wagner, Wiley-VCH Verlag GmbH & Co. KGaA, August 2010.

Wie im Zusammenhang mit der vorliegenden Offenbarung gefunden wurde, ist die nach dem hier beschriebenen erfindungsgemäßen Verfahren herstellbare bzw. hergestellte Polyasparaginsäure sehr gut als Calziumcarbonatbelagsinhibitor geeignet. Die vorliegende Offenbarung umfasst daher auch die Verwendung der nach dem erfindungsgemäßen herstellbaren bzw. hergestellten Polyasparaginsäure bzw. dieser umfassenden Zusammensetzungen als Belagsinhibitor, bevorzugt als Calziumcarbonatbelagsinhibitor.

Ein weiterer Gegenstand der Offenbarung ist die Verwendung der Polyasparaginsäuren oder deren Gemische als Belagsinhibitoren oder Dispergiermittel in wasserführenden Systemen. Wasserführende Systeme, in denen Polyasparaginsäuren, die nach dem erfindungsgemäßen Verfahren herstellbar sind, Verwendung finden können, sind prinzipiell alle Systeme, die permanent oder sporadisch in Kontakt mit Wasser wie Meerwasser, Brackwasser, Flusswasser, städtischen oder industriellen Abwässern oder industriellem Prozesswasser wie Kühlwasser in Kontakt kommen und in denen Belagsbildung auftreten kann.

Wasserführende Systeme, in denen die Polyasparaginsäuren verwendet werden können, sind insbesondere Meerwasserentsalzungsanlagen, Brackwasserentsalzungsanlagen, Kühlwassersysteme und Kesselspeisewassersysteme, Dampfkessel, Erhitzer, Durchlauferhitzer, Heißwasserspeicher, Kühltürme, Kühlwasserkreisläufe und sonstige industrielle Prozesswässer. Die Entsalzungsanlagen können thermischer Natur sein oder auf Membranverfahren wie Umkehrosmose oder Elektrodialyse beruhen.

Im Allgemeinen werden die Polyasparaginsäuren den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systeme können auch Formulierungen zugegeben werden, die neben den Polyasparaginsäuren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylen-phosphonsäure) (DTPMP) und Ethylendiamintetra(methylenphophonsäure) (EDTMP), die jeweils in Säureform oder in Form ihrer Natriumsalze verwendet werden.

Die folgenden Beispiele dienen der Illustration der vorliegenden Erfindung und dürfen nicht als Beschränkung darauf verstanden werden.

**Beispiele**

Polymer V1 (Vergleichsbeispiel): Polykondensation von L-Asparaginsäure in Gegenwart von 5 **mol% Methansulfonsäure im Glasreaktor**

In einem 2 l fassenden Glasreaktor mit Rührer und Temperaturmessfühler wurden 133,10 g L-Asparaginsäure, 30 g Wasser und 4,81 g Methansulfonsäure vorgelegt. Die Reaktionsmischung wurde bei leichtem Stickstoffstrom unter Rühren auf die Kondensationstemperatur von 210 °C bis 220 °C unter gleichzeitiger Abdestillation von Wasser erhitzt. Nach 15 min entstand ein sehr viskoser Teig, welcher nicht mehr gerührt werden konnte. Innerhalb von weiteren 15 min erstarrte das Reaktionsprodukt zu einer festen Masse. Der Reaktor wurde auf Raumtemperatur abgekühlt. Die verbackene Reaktionsmasse wurde mit einem Spatel aus dem Reaktor herausgeholt und mit einem Mörser und Pistill zu einem Pulver zerkleinert. Die zerkleinerte Reaktionsmischung wurde wieder in den Reaktor gegeben bei leichtem Stickstoffstrom unter Rühren auf die Kondensationstemperatur von 210 °C bis 220 °C erhitzt und für weitere 5,5 Stunden unter gleichzeitiger Abdestillation von Wasser bei dieser Temperatur kondensiert. Um die wässrige Natriumsalzlösung der Polyasparaginsäure herzustellen, dispergierte man 100 g des abgekühlten Reaktionsproduktes in 100 g Wasser, erwärmte die Mischung auf 70 °C und fügte bei dieser Temperatur so viel einer 50%igen wässrigen Natronlauge zu, so dass der pH-Wert im Bereich 7 bis 9 lag. Dabei löste sich das in Wasser dispergierte Pulver allmählich auf und man erhielt eine klare wässrige Natriumsalzlösung der Polyasparaginsäure. Das gewichtsmittlere Molekulargewicht Mw betrug 7700 g/mol.

**V2: Polykondensation von vorkondensierter L-Asparaginsäure in Gegenwart von 5 mol% Methansulfonsäure im Glasreaktor**

In einem 2 l fassenden Glasreaktor mit Rührer und Temperaturmessfühler wurden 266,20 g L-Asparaginsäure vorgelegt. Bei leichtem Stickstoffstrom und unter Rühren wurde der Reaktorinhalt 15 min bei einer Kondensationstemperatur von 210 °C bis 220 °C unter gleichzeitiger Abdestillation von Wasser erhitzt und anschließend wieder auf Raumtemperatur abgekühlt. Der Umsetzungsgrad von L-Asparaginsäure nach diesem Vorkondensationsschritt betrug 20% (Messung wie unten beschrieben). Unter Rühren wurde nun eine Lösung von 9,61 g Methansulfonsäure in 60 g Wasser zugegeben. Das feuchte pulvrige Reaktionsgemisch wurde bei leichtem Stickstoffstrom unter Rühren auf die Kondensationstemperatur von 210 °C bis 220 °C unter gleichzeitiger Abdestillation von Wasser für 5,5 h erhitzt, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7200 g/mol.

**V3 (Vergleichsbeispiel): Polykondensation von L-Asp in Gegenwart 5 mol% Methansulfonsäure in einem 0,7 L LIST Discotherm B Reaktor**

In einen 0,7 l LIST Discotherm B Reaktor wurden 266,20 g L-Asparaginsäure, 60 g Wasser und 9,62 g Methansulfonsäure vorgelegt. Der Reaktorinhalt wurde bei leichtem Stickstoffstrom unter Rühren mit 20 Umdrehungen pro Minute auf die Kondensationstemperatur von 230 °C unter gleichzeitiger Abdestillation von Wasser erhitzt. Nach 15 min entstand ein sehr viskoser, klebriger Teig und es wurde ein hoher Drehmomentanstieg beobachtet. Nach weiteren 15 min erstarrte das Reaktionsprodukt zu einer festen Masse und es kam schließlich zum Stillstand der Rührwelle. Nach Abkühlen auf Raumtemperatur, wurde das verbackene Reaktionsgemisch mit Hilfe eines Spatels aus dem Reaktor herausgeholt und mit einem Mörser und Pistill zu einem Pulver zerkleinert. Die zerkleinerte Reaktionsmischung wurde wieder in den Reaktor gegeben bei leichtem Stickstoffstrom unter Rühren auf die Kondensationstemperatur von 230 °C erhitzt und für weitere 5,5 Stunden unter gleichzeitiger Abdestillation von Wasser bei dieser Temperatur kondensiert. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7700 g/mol.

**V4 (Vergleichsversuch): Polykondensation von L-Asp in Gegenwart 5 mol% Methansulfonsäure und 10 Gew% Polyaspartimid in einem Discotherm B Reaktor.**

In einen 0,7 l LIST Discotherm B Reaktor wurden 239,4 g L-Asparaginsäure, 23,9 g Polyaspartimid-T (Herstellung wie in V5), 54 g Wasser und 8,7 g Methansulfonsäure vorgelegt. Der Reaktorinhalt wurde bei leichtem Stickstoffstrom unter Rühren mit 20 Umdrehungen pro Minute auf die Kondensationstemperatur von 230 °C unter gleichzeitiger Abdestillation von Wasser 6 h erhitzt. Es kam nicht zu einer Verbackung des Reaktonsgemisches und damit auch nicht zu einem Stillstand der Apparatur. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug7200 g/mol.

**V5 (Vergleichsbeispiel): Herstellung von Polyaspartimid-T**

In einem Rotationsverdampfer wurden 133.10 g L-Asparaginsäure bis zur Gewichtskonstanz bei einer Temperatur von 220-240°C polykondensiert. Das gewichtsmittlere Molekulargewicht Mw betrug 5400 g/mol.

**V6: Polykondensation von vorkondensierter L-Asparaginsäure in Gegenwart von 5 mol% Methansulfonsäure im Glasreaktor**

In einem 2 l fassenden Glasreaktor mit Rührer und Temperaturmessfühler wurden 266,20 g L-Asparaginsäure vorgelegt. Bei leichtem Stickstoffstrom und unter Rühren wurde der Reaktorinhalt 30 min bei einer Kondensationstemperatur von 210 °C bis 220 °C unter gleichzeitiger Abdestillation von Wasser erhitzt und anschließend wieder auf Raumtemperatur abgekühlt. Der Umsetzungsgrad von L-Asparaginsäure nach diesem Vorkondensationsschritt betrug 36% (Messung wie unten beschrieben). Unter Rühren wurde nun eine Lösung von 9,61 g Methansulfonsäure in 60 g Wasser zugegeben. Das feuchte pulvrige Reaktionsgemisch wurde bei leichtem Stickstoffstrom unter Rühren auf die Kondensationstemperatur von 210 °C bis 220 °C erhitzt und für 5,5 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7100 g/mol.

**V7: Polykondensation von vorkondensierter L-Asparaginsäure in Gegenwart von 5 mol% Methansulfonsäure im Glasreaktor**

In einem 2 l fassenden Glasreaktor mit Rührer und Temperaturmessfühler wurden 266,20 g L-Asparaginsäure vorgelegt. Bei leichtem Stickstoffstrom und unter Rühren wurde der Reaktorinhalt 5 min bei einer Kondensationstemperatur von 210 °C bis 220 °C unter gleichzeitiger Abdestillation von Wasser erhitzt und anschließend wieder auf Raumtemperatur abgekühlt. Der Umsetzungsgrad von L-Asparaginsäure nach diesem Vorkondensationsschritt betrug 12% (Messung wie unten beschrieben). Unter Rühren wurde nun eine Lösung von 9,61 g Methansulfonsäure in 60 g Wasser zugegeben. Das feuchte pulvrige Reaktionsgemisch wurde bei leichtem Stickstoffstrom unter Rühren auf die Kondensationstemperatur von 210 °C bis 220 °C erhitzt und für 5,5 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7600 g/mol.

**V8 (Vergleichsversuch): Polykondensation von L-Asparaginsäure in Gegenwart 5 mol% Methansulfonsäure und 20 Gew% Polyaspartimid im Glasreaktor.**

In einem 2 l fassenden Glasreaktor mit Rührer und Temperaturmessfühler wurden 266,2 g L-Asparaginsäure, 53,2 g Polyaspartimid T (Herstellung wie in V5), 60 g Wasser und 9,6 g Methansulfonsäure vorgelegt. Der Reaktorinhalt wurde bei leichtem Stickstoffstrom unter Rühren auf die Kondensationstemperatur von 210 °C bis 220 °C erhitzt und für 6 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7000 g/mol.

**V9 (Vergleichsversuch): Polykondensation von L-Asparaginsäure in Gegenwart 5 mol% Methansulfonsäure und 5 Gew% Polyaspartimid im Glasreaktor.**

In einem 2 l fassenden Glasreaktor mit Rührer und Temperaturmessfühler wurden 266,2 g L-Asparaginsäure, 13,3 g Polyaspartimid T (Herstellung wie in V5), 60 g Wasser und 9,6 g Methansulfonsäure vorgelegt. Der Reaktorinhalt wurde bei leichtem Stickstoffstrom unter Rühren auf die Kondensationstemperatur von 210 °C bis 220 °C erhitzt und für 6 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7500 g/mol.

**V10 (Vergleichsversuch): Polykondensation von L-Asparaginsäure in Gegenwart 7,5 mol% Methansulfonsäure und 30 Gew% Polyaspartimid im Glasreaktor.**

In einem 2 l fassenden Glasreaktor mit Rührer und Temperaturmessfühler wurden 199,7 g L-Asparaginsäure, 59,9 g Polyaspartimid T (Herstellung wie in V5), 60 g Wasser und 10,8 g Methansulfonsäure vorgelegt. Der Reaktorinhalt wurde bei leichtem Stickstoffstrom unter Rühren auf die Kondensationstemperatur von 210 °C bis 220 °C erhitzt und für 6 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 8000 g/mol.

**V11: Polykondensation von vorkondensierter L-Asparaginsäure in Gegenwart von 5 mol%**

**Phosphorsäure im Glasreaktor**In einem 2 l fassenden Glasreaktor mit Rührer und Temperaturmessfühler wurden 266,20 g L-Asparaginsäure vorgelegt. Bei leichtem Stickstoffstrom und unter Rühren wurde der Reaktorinhalt 15 min bei einer Kondensationstemperatur von 210 °C bis 220 °C unter gleichzeitiger Abdestillation von Wasser erhitzt und anschließend wieder auf Raumtemperatur abgekühlt. Der Umsetzungsgrad von L-Asparaginsäure nach diesem Vorkondensationsschritt betrug 20% (Messung wie unten beschrieben). Unter Rühren wurde nun eine Lösung von 11,53 g Phosphorsäure (85%ig) in 60 g Wasser zugegeben. Das feuchte pulvrige Reaktionsgemisch wurde bei leichtem

Stickstoffstrom unter Rühren auf die Kondensationstemperatur von 210 °C bis 220 °C erhitzt und für 5,5 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7800 g/mol.

**V12 (Vergleichsversuch): Polykondensation von L-Asparaginsäure in Gegenwart von 5 mol% Phosphorsäure und 10 Gew% Polyaspartimid im Glasreaktor**

In einem 2 l fassenden Glasreaktor mit Rührer und Temperaturmessfühler wurden 266,2 g L-Asparaginsäure, 26,6 g Polyaspartimid T (Herstellung wie in V5), 60 g Wasser und 11,53 g Phosphorsäure (85%ig) vorgelegt. Der Reaktorinhalt wurde bei leichtem Stickstoffstrom unter Rühren auf die Kondensationstemperatur von 210 °C bis 220 °C erhitzt und für 6 h unter gleichzeitiger Abdestillation von Wasser bei dieser Temperatur polykondensiert, ohne dass sich eine harte, nicht mehr rührbare Reaktionsmasse bildete. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 8200 g/mol.

**Bestimmung des Molekulargewichts (Mw und Mn)**

Das gewichtsmittlere bzw. zahlenmittlere Molekulargewicht (Mw bzw. Mn) der Beispiele wurde mit Hilfe von GPC (Gel-Permeations-Chromatographie) unter folgenden Bedingungen bestimmt:

| | |
|---|---|
| Säule | PSS SUPREMA analytical linear M (Material: Polyhydroxymethacrylat Copolymer-Netzwerk Länge: 300 mm, Durchmesser 8 mm, Partikelgröße 10μ) |
| Elutionsmittel | 0,08 mol/l TRIS-Puffer pH = 7,0 in dest Wasser + 0,15 mol/l NaCl + 0,01 mol/l $NaN_3$ |
| Säulentemperatur | 35 °C |
| Durchflußgeschwindigkeit | 0.8 mL/min |
| Injektion | 100 μL |
| Konzentration | 1,5 mg/mL |
| Detektor | DRI Agilent 1100UV GAT-LCD 503 (260nm) |

Für die Molekulargewichtsbestimmung wurde eine kleine Menge des nach dem Polykondensationsschritt entstandenen Polyaspartimids entnommen und mehrmals mit Wasser gewaschen, um so die eingesetzte Methansulfonsäure zu entfernen. Das gewaschene Pulver wurde dann wie beschrieben mit Natronlauge hydrolysiert (d.h. man dispergierte das gewaschene Pulver in Wasser, erwärmte die Mischung auf 70 °C und fügte bei dieser Temperatur so viel einer 50%igen wässrigen Natronlauge zu, so dass der pH-Wert im Bereich 7-9 lag. Dabei löste sich das in Wasser dispergierte Pulver allmählich auf und man erhielt eine klare wässrige Natriumsalzlösung der Polyasparaginsäure). Probelösungen wurden über Sartorius Minisart RC 25 (0,2 μm) filtriert. Die Kalibrierung erfolgte mit eng verteilten Na-PAA-Standards der Fa. Polymer Standard Service mit Molekulargewichten von M = 1.250 g/mol bis M = 130500 g/mol. Zusätzlich wurde Na-Acrylat mit einem Molekulargewicht von M = 96 und ein PEG-Standard mit M = 620, der mit Na-PAA M = 150 gleichgesetzt wurde, benutzt. Die Werte außerhalb dieses Elutionsbereiches wurden extrapoliert. Die Auswertegrenze lag bei 122 g/mol.

**Bestimmung des Umsetzungsgrades:**

Zur Bestimmung des Umsetzungsgrades wurde der Anteil an nicht umgesetzter monomerer Asparaginsäure im Vorkondensat ermittelt. Hierzu wurden 100 mg des Vorkondensats in ein 50 ml Ampullenglas eingewogen, mit 9,9 mL 1 N HCL versetzt und 3 Stunden bei 350 U/min gerührt. Danach wurde die Probe über einen Spartan 30 mm / 0.45 μm RC Spritzenfilter (GE Healthcare) filtriert und 1:10 (v/v) mit Wasser verdünnt. Mittels Hochleistungsflüssigkeitschromatographie (HPLC) wurde der Asparaginsäuregehalt dieser verdünnten Lösung ermittelt.

Beispielhaft für V2: In 100 mg des Vorkondensats wurde ein Asparaginsäuregehalt von 80 mg gefunden. Der Umsetzungsgrad U wurde dann folgendermaßen berechnet:

$$U = (100\ mg - 80\ mg) / 100\ mg = 20\ \%.$$

<table>
<tr><td>Apparatur</td><td>Agilent 1290 Infinity Serie mit Diode Array Detector</td></tr>
<tr><td>Trennsäule:</td><td>SIELC Primesep 100, 5µm 100 A (3,2 x 100 mm)</td></tr>
<tr><td>Temperatur</td><td>25 °C</td></tr>
<tr><td>Injektionsvolumen</td><td>5 µL</td></tr>
<tr><td>Fluss</td><td>1,0 mL / min</td></tr>
<tr><td>Detektion</td><td>205 nm</td></tr>
<tr><td>Eluent</td><td>Eluent A: Wasser/Acetonitril 7/3 v/v<br>Eluent B: Wasser/Acetonitril/Phosphorsäure 700/300/5 v/v/v<br><br>Gradient:<br><table><tr><td>Laufzeit (min)</td><td>0</td><td>5</td><td>6</td><td>15</td></tr><tr><td>Eluent A (vol%)</td><td>95</td><td>87,5</td><td>100</td><td>100</td></tr><tr><td>Eluent B (vol%)</td><td>5</td><td>12,5</td><td>0</td><td>0</td></tr></table></td></tr>
<tr><td>Kalibrierung</td><td>Es wurden zwei Einwaagen der Referenzsubstanz L-Asparaginsäure (Merck Millipore) in 2 mL 1 M HCL gelöst und mit Wasser aufgefüllt. Die beiden Stammlösungen wurden weiter verdünnt, so dass 4 weitere Kalibrierlösungen entstanden sind. Die Konzentrationen der 6 hergestellten Kalibrierlösungen wurden so gewählt, dass der Gehalt der Probe innerhalb der Kalibrierlösungen liegt.</td></tr>
</table>

**Patentansprüche**

**1.** Verfahren zur Herstellung von Polyasparaginsäure, umfassend folgende Schritte:

(a) Vorkondensation von Asparaginsäure bei einer Temperatur von 100 bis 250 °C bis zu einem Umsetzungsgrad von mindestens 2%;
(b) optional Abkühlen des Vorkondensats nach (a);
(c) Zugabe von 1 bis 25 mol% bezogen auf die in Schritt (a) eingesetzte Menge an Asparaginsäure eines sauren Katalysators;
(d) Polykondensation der Reaktionsmasse nach (c) bei 170 bis 250 °C;
(e) Hydrolyse der Polykondensate nach (d) unter Zugabe einer Base; und
(f) optional Ansäuern der in (e) erhaltenen Salze der Polyasparaginsäure.

**2.** Verfahren nach Anspruch 1, wobei nach Schritt d) und vor dem Schritt e) die erhaltenen Salze der Polyasparaginsäure in einem zusätzlichen Schritt mit Bleichmitteln behandelt werden.

**3.** Verfahren nach Anspruch 1, wobei Schritt e) in Gegenwart von Bleichmitteln durchgeführt wird.

**4.** Verfahren nach Anspruch 1, wobei nach Schritt e) und vor dem optionalen Schritt f) die erhaltenen Salze der Polyasparaginsäure in einem zusätzlichen Schritt mit Bleichmitteln behandelt werden.

**5.** Verfahren nach einem der Ansprüche 1 bis 4, wobei in Schritt (c) 3 bis 15 mol% des sauren Katalysators zugegeben wird.

**6.** Verfahren nach einem der Ansprüche 1 bis 5, wobei der saure Katalysator Methansulfonsäure ist.

**7.** Verfahren nach einem der Ansprüche 1 bis 6, wobei die Polykondensation bei 200 bis 250 °C durchgeführt wird.

**8.** Verfahren nach einem der Ansprüche 1 bis 7, wobei die Base ausgewählt ist aus der Gruppe bestehend aus Natronlauge, Kalilauge, Calciumhydroxid, Bariumhydroxid, Soda, Kaliumcarbonat, Ammoniak, und Ammoniumhydroxid.

**9.** Verfahren nach einem der Ansprüche 1 bis 8, wobei die Ansäuerung durchgeführt wird mit einer Mineralsäure oder einem sauren Ionenaustauscher.

**10.** Verfahren nach einem der Ansprüche 1 bis 9, wobei in Schritt (a) der Umsetzungsgrad der Asparaginsäure mindestens 5 % beträgt.

**11.** Verfahren nach einem der Ansprüche 1 bis 10, wobei in Schritt (a) die Temperatur 220 bis 250 °C beträgt.

**Claims**

**1.** A method for preparing polyaspartic acid, comprising the following steps:

(a) precondensing aspartic acid at a temperature of 100 to 250°C up to a degree of conversion of at least 2%;
(b) optionally cooling the precondensate according to (a);
(c) adding 1 to 25 mol% of an acidic catalyst, based on the amount of aspartic acid used in step (a);
(d) polycondensing the reaction mixture after (c) at 170 to 250°C;
(e) hydrolyzing the polycondensates according to (d) with addition of a base; and
(f) optionally acidifying the salts of polyaspartic acid obtained in (e).

**2.** The method according to claim 1, wherein after step d) and prior to step e), the salts of polyaspartic acid obtained are treated with bleaching agents in an additional step.

**3.** The method according to claim 1, wherein step e) is carried out in the presence of bleaching agents.

**4.** The method according to claim 1, wherein after step e) and prior to the optional step f), the salts of polyspartic acid obtained are treated with bleaching agents in an additional step.

**5.** The method according to any of claims 1 to 4, wherein in step (c) 3 to 15 mol% of the acidic catalyst is added.

**6.** The method according to any of claims 1 to 5, wherein the acidic catalyst is methanesulfonic acid.

**7.** The method according to any of claims 1 to 6, wherein the polycondensation is carried out at 200 to 250°C.

**8.** The method according to any of claims 1 to 7, wherein the base is selected from the group consisting of aqueous sodium hydroxide solution, aqueous potassium hydroxide solution, calcium hydroxide, barium hydroxide, sodium carbonate, potassium carbonate, ammonia and ammonium hydroxide.

**9.** The method according to any of claims 1 to 8, wherein the acidification is carried out with a mineral acid or an acidic ion exchanger.

**10.** The method according to any of claims 1 to 9, wherein in step (a) the degree of conversion of aspartic acid is at least 5%.

**11.** The method according to any of claims 1 to 10, wherein in step (a) the temperature is 220 to 250°C.

## Revendications

1. Procédé de préparation de poly(acide aspartique), comprenant les étapes suivantes :

   (a) pré-condensation d'acide aspartique à une température de 100 à 250 °C jusqu'à un taux de conversion d'au moins 2 % ;
   (b) éventuellement refroidissement du pré-condensat selon (a) ;
   (c) addition de 1 à 25 % en moles, par rapport à la quantité d'acide aspartique utilisée dans l'étape (a), d'un catalyseur acide ;
   (d) polycondensation de la masse réactionnelle selon (c) à 170 à 250 °C ;
   (e) hydrolyse des produits de polycondensation selon (d) avec addition d'une base ; et
   (f) éventuellement acidification des sels du poly(acide aspartique) obtenus en (e).

2. Procédé selon la revendication 1, dans lequel, après l'étape d) et avant l'étape e), les sels du poly(acide aspartique) obtenus sont, dans une autre étape, traités avec des agents de blanchiment.

3. Procédé selon la revendication 1, dans lequel l'étape e) est mise en œuvre en présence d'agents de blanchiment.

4. Procédé selon la revendication 1, dans lequel, après l'étape e) et avant l'étape éventuelle f), les sels du poly(acide aspartique) obtenus sont, dans une autre étape, traités avec des agents de blanchiment.

5. Procédé selon l'une des revendications 1 à 4, dans lequel, dans l'étape (c) on ajoute 3 à 15 % en moles du catalyseur acide.

6. Procédé selon l'une des revendications 1 à 5, dans lequel le catalyseur acide est l'acide méthanesulfonique.

7. Procédé selon l'une des revendications 1 à 6, dans lequel la polycondensation est mise en œuvre à 200 à 250 °C.

8. Procédé selon l'une des revendications 1 à 7, dans lequel la base est choisie dans le groupe consistant en la lessive de soude, la lessive de potasse, l'hydroxyde de calcium, l'hydroxyde de baryum, le carbonate de sodium, le carbonate de potassium, l'ammoniac et l'hydroxyde d'ammonium.

9. Procédé selon l'une des revendications 1 à 8, dans lequel l'acidification est mise en œuvre avec un acide minéral ou un échangeur d'ions acide.

10. Procédé selon l'une des revendications 1 à 9, dans lequel, dans l'étape (a), le taux de conversion de l'acide aspartique est d'au moins 5 %.

11. Procédé selon l'une des revendications 1 à 10, dans lequel, dans l'étape (a), la température est de 220 à 250° C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5457176 A
- DE 4023463 A1
- JP 2000273173 B
- US 5552517 A
- WO 1996004330 A
- EP 851023 A
- DE 19819187 A
- US 5422028 A
- US 5294362 A
- US 5292447 A
- US 5039447 A
- JP 58217598 A
- WO 9013533 A
- WO 9507331 A
- US 3234258 A
- US 5075041 A
- WO 2009019225 A2
- EP 013836 A
- WO 2006016035 A
- WO 9906524 A
- WO 9904313 A


### In der Beschreibung aufgeführte Nicht-Patentliteratur


- Surfactant Sci. Ser. Liquid Detergents. Marcel Decker, 1997, vol. 67, 272-304
- Surfactant Sci Ser. Handbook of Detergents, Part D: Formulation. CRC Press, 2006, vol. 128
- Surfactant Sci Ser. Liquid Detergents. CRC Press, 2006, vol. 129
- Waschmittel: Chemie, Umwelt, Nachhaltigkeit, Günter Wagner. Wiley-VCH Verlag GmbH & Co. KGaA, August 2010